# EUROPÄISCHE PATENTANMELDUNG

(11) **EP 0 942 513 A2**
(43) Veröffentlichungstag der Anmeldung: **15.09.1999**
(21) Anmeldenummer: 99890082.3
(22) Anmeldetag: 10.03.1999
(51) Int. Cl.: H02K 7/102, H02K 7/20, H02K 9/14, H02K 11/00

(54) **Elektromotor**

(30) Priorität: 10.03.1998 AT 42298
(71) Anmelder: ATB Austria Antriebstechnik Aktiengesellschaft, 8724 Spielberg (Steiermark) (AT)
(72) Erfinder: Sand, Hansjörg, 8724 Spielberg/zeltweg (AT)
(74) Vertreter: Hehenberger, Reinhard, Dipl.-Ing.

(57) **Zusammenfassung**

Um einen Elektromotor (1) bei Bedarf wahlweise mit einem oder mehreren weiteren bauteilen wie einer Bremse 2, einem Impuls-Geber (10) und/oder einem Lüfter (11, 12) ausrüsten zu können, ist jeder Bauteil (2, 10, 11, 12) mit einem Wellenstummel (3) ausgerüstet, der an einem Ende einen Zentrierbund (16) und eine axiale Durchgangsbohrung (18) aufweist. Die Wellenstummel (3) können mittels einer Schraube (13), die durch die Durchgangsbohrung (18) im Wellenstummel (3) geführt und in eine Zentrierbohrung (4) an der Rotorwelle (5) bzw. deren verlängerung (9) eingeschraubt ist, angebaut werden.

## Beschreibung

Die Erfindung betrifft einen Elektromotor, der baukastensystemartig mit weiteren Bauteilen verbunden werden kann.

Es ist bekannt, an Elektromotoren verschiedene weitere Bauteile, wie Bremsen, (Fremd-)Lüfter oder Impulsgeber anzubauen, um den Motor an den jeweils vorgesehenen Einsatzzweck anzupassen.

Der Erfindung liegt die Aufgabe zugrunde, ein Baukastensystem für Elektromotoren anzugeben, mit dem das Nach- und Umrüsten von Elektromotoren besonders einfach möglich ist.

Erfindungsgemäß wird diese Aufgabe mit einem Elektromotor mit den Merkmalen des Anspruches 1 gelöst.

Bevorzugte und vorteilhafte Ausführungen des erfindungsgemäßen Baukastensystems sind Gegenstand der Unteransprüche.

Mit dem erfindungsgemäßen Baukastensystem für Elektromotoren ist es möglich, mit dessen Welle weitere Bauteile zu verbinden, wobei auch mehr als ein weiterer Bauteil angebaut werden kann. So ist es beispielsweise möglich, einen erfindungsgemäß ausgestatteten Elektromotor mit weiteren Bauteilen, wie einer Bremse, einem Impuls-Geber und/oder einem (Fremd-)Lüfter, auszurüsten. Dabei ist es in einer Ausführungsform auch möglich, Kombinationen von Bauteilen am Elektromotor anzubauen. So kann beispielsweise ein Impulsgeber mit einem (Fremd-)Lüfter oder eine Bremse mit einem (Fremd-) Lüfter oder eine Bremse mit einem Impuls-Geber u. dgl. kombiniert werden.

Weitere Einzelheiten, Merkmale und Vorteile der erfindungsgemäßen Ausführung eines Elektromotors mit Baukastensystem für weitere, anzubauende Teile ergeben sich aus der nachstehenden Beschreibung, in der auf die angeschlossene Zeichnung Bezug genommen ist, in der schematisch und beispielhaft ein Elektromotor mit wahlweise an ihm anbaubaren Bauteilen dargestellt ist.

Fig. 1 einen Elektromotor, teilweise im Schnitt, am B-seitigen (belüftungsseitigen) Ende,

Fig. 2 eine Fig. 1 entsprechende Ansicht eines Motors mit verlängerter Rotorwelle,

Fig. 3 teilweise im Schnitt einen an den Motor von Fig. 1 oder 2 anbaubaren Impulsgeber und Lüfter,

Fig. 4 teilweise im Schnitt einen an den Motor von Fig. 1 oder 2 anbaubaren Impulsgeber sowie einen Fremdlüfter und

Fig. 5 teilweise im Schnitt einen an den Motor von Fig. 1 oder 2 anbaubaren Lüfter.

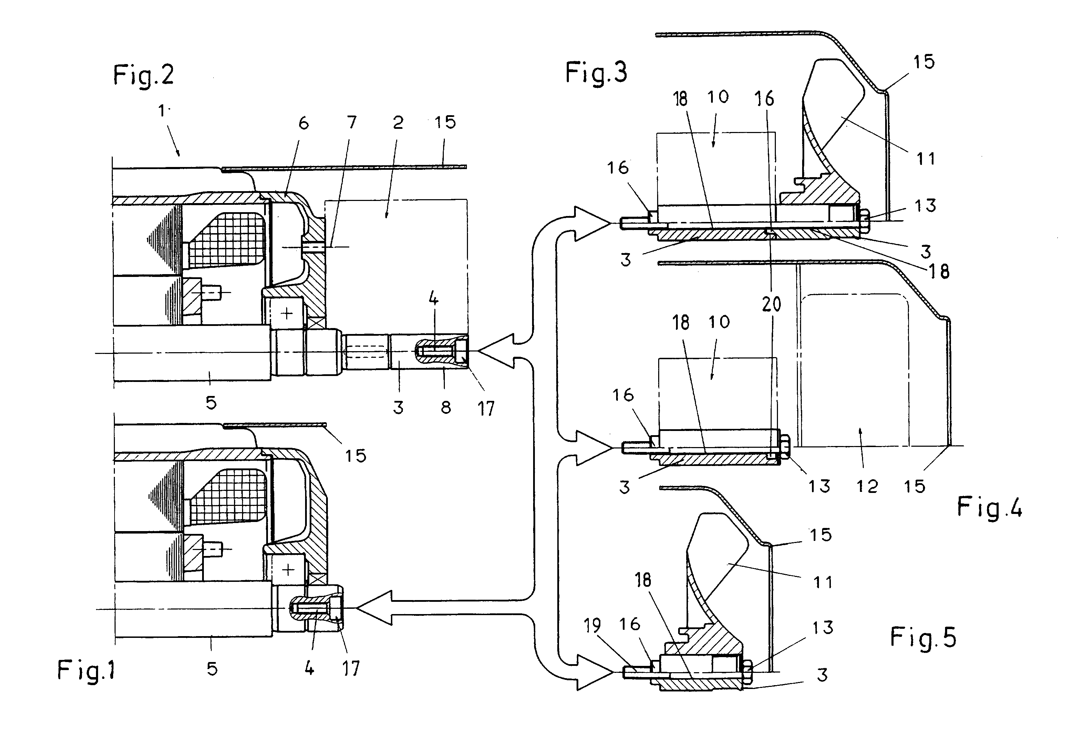

In den Fig. 1 und 2 ist ein (Norm-)Elektromotor 1 der Baugröße 80 lediglich teilweise, und zwar an seinem B-seitigen (belüftungsseitigen) Ende gezeigt. Auch die diese Seite des Elektromotors 1 überdeckende Endkappe 15 ist nur teilweise dargestellt.

In Fig. 2 ist ein Elektromotor 1 dargestellt, an dem eine Bremse 2 beliebiger Bauart angebaut ist. Die Bremse 2 sitzt auf einem Wellenstummel 9 der Rotorwelle 5 des Elektromotors 1. Zusätzlich ist die Bremse 2 zur Sicherung und zum besseren Auffangen von Drehmomenten beim Bremsen mit dem B-seitigen Lagerschild 6 verbunden, z.B. durch eine Verbindungsschraube, die in eine Gewindebohrung 7 im Lagerschild 6 eingreift, verschraubt.

Die Darstellung in Fig. 2 zeigt, daß das vom Elektromotor 1 abgekehrte Ende 8 des Wellenstummels 9 der Bremse 2 eine Gewindebohrung 4 aufweist, so daß an den Wellenstummel 9 bei Bedarf weitere Bauteile, wie beispielsweise ein Impuls-Geber 10 und/oder ein (Eigen-) Lüfter 11 angeschraubt und so am Elektromotor 1 angebaut werden können.

In Fig. 2 ist der Wellenstummel 9 für die Bremse mit der Rotorwelle 5 aus einem Stück. Es besteht jedoch die Möglichkeit, nachträglich auf einer kurzen Rotorwelle (in Fig. 2 dargestellt) einen Wellenstummel 3 für den Bremsanbau anzubringen, falls eine Motorbremse angebaut werden soll.

Wenn an den Elektromotor 1 keine Bremse 2 anzubauen ist, kann, wie Fig. 1 zeigt, über die Gewindebohrung 4 an die Rotorwelle 5 unmittelbar ein Impuls-Geber 10 und ein (Eigen-)Lüfter 11 angebaut werden (Fig. 3). Es ist aber auch möglich, einen Impuls-Geber 10 und einen (Fremd-)Lüfter 12 anzubauen, wie dies in Fig. 4 angedeutet ist, oder nur einen (Eigen-)Lüfter 11, wie Fig. 5 zeigt.

Alle Bauteile, die an den Elektromotor 1 angebaut werden können, also Bremse 2, Impuls-Geber 10 und (Eigen-)Lüfter 11 bzw. (Fremd-) Lüfter 12, besitzen einen Wellenstummel 3, der an einem Ende einen Zentrierbund 16 trägt, der in eine Zentrierbohrung 17 in der Rotorwelle 5 eingefügt werden kann. Am anderen Ende können die Wellenstummel 3 eine Zentrierbohrung 20 entsprechend der Zentrierbohrung 17 der Rotorwelle 5 besitzen (Fig. 3 und Fig. 4), in die beim Anbau weiterer Bauteile der Zentrierbund 16 am Wellenstummel 3 eines weiteren Bauteils eingefügt wird. Fixiert werden die Wellenstummel 3 durch eine entsprechend lange Schraube 13, die durch eine axiale Durchgangsgangsbohrung 18 durch sämtliche anzubauende Wellenstummel 3 bis zur Rotorwelle 5 ragt und in die Gewindebohrung 4 der Rotorwelle 5 bzw. deren Verlängerung 9 eingeschraubt wird.

Anstatt die Wellenstummel 3 mit Durchgangsbohrungen 18 für eine Schraube 13 auszustatten, kann auch vorgesehen sein, daß an den Zentrierbund 16 ein Gewindezapfen 19 anschließt, der mit dem Wellenstummel 3 einstückig ausgeführt ist. Mit Bezug auf die in Fig. 5 dargestellte Ausführungsform würde in diesem Fall die Schraube 13 entfallen und der mit 19 bezeichnete Gewindeteil der Schraube ein Teil des Wellenstummels 3 sein.

Bei dieser Ausführungsform ist es möglich, jeden Wellenstummel 3 direkt in die Rotorwelle 5 bzw. deren Verlängerung 9 oder einen vorgelagerten Wellenstummel 3 einzuschrauben, ohne weitere Hilfsmittel wie die Schraube 13 zu benötigen.

Es versteht sich, daß insbesondere bei der zuletzt beschriebenen Ausführungsform mit einem Gewindezapfen 19 am Wellenstummel 3 der Zentrierbund 16 und die Zentrierbohrung 17 nicht als zylinderförmiger Teil, sondern z.B. als kegelstumpfförmiger Zentrierbund 16, der in eine kegelstumpfförmige Zentrierbohrung 17 eingreift, ausgeführt sein können. Wesentlich ist lediglich, daß mit Hilfe des Zentrierbundes 16 und der Zentrierbohrung 17 eine exakt fluchtende Ausrichtung der Rotorwelle 5, 9 und des oder der Wellenstummel(s) 3 erreicht wird.

Falls mehr als ein Wellenstummel 3 an die Rotorwelle 5, 9 angebaut werden soll, muß bei der Ausführungsform, bei der ein Gewindezapfen 19 verwendet wird, wenigstens der oder die motorseitigen Wellenstummel 3 mit einer Gewindebohrung 4 und einer Zentrierbohrung 20 ausgestattet sein (in Fig. 3 ist dies der Wellenstummel 3 mit dem Impulsgeber 10), damit der oder die vom Elektromotor 1 entfernten Wellenstummel 3 in die dem Elektromotor 1 näheren Wellenstummel 3 eingeschraubt werden können. Falls nur ein Wellenstummel 3 angebaut werden soll (Fig. 5) bzw. beim vom Elektromotor 1 entferntesten Wellenstummel (dem Wellenstummel 3 des Lüfters 11 in Fig. 3) ist eine Zentrierbohrung 20 bzw. eine Gewindebohrung für einen Gewindezapfen 19 natürlich entbehrlich.

Wie in der Zeichnung dargestellt, bestehen verschiedene Möglichkeiten, den erfindungsgemäßen Elektromotor 1 mit dem erfindungsgemäßen Baukastensystem durch die jeweils gewünschten Bauteile und Kombinationen derselben zu ergänzen. Besondere Änderungen am Elektromotor 1 selbst sind nicht erforderlich. Es ist lediglich vorteilhaft, wenn die Schutzkappe 15 an die axiale Abmessung der zusätzlichen Bauteile angepaßt wird.

Zusammenfassend kann ein bevorzugtes Ausführungsbeispiel des erfindungsgemäßen Elektromotors wie folgt beschrieben werden:

Um einen Elektromotor 1 bei Bedarf wahlweise mit einem oder mehreren weiteren Bauteilen, wie einer Bremse 2, einem Impuls-Geber 10 und/oder einem Lüfter 11, 12 ausrüsten zu können, ist jeder Bauteil 2, 10, 11, 12 mit einem Wellenstummel 3 ausgerüstet, der an einem Ende einen Zentrierbund 16 und eine axiale Durchgangsbohrung 18 aufweist. Die Wellenstummel 3 können mittels einer Schraube 13, die durch die Durchgangsbohrung 18 im Wellenstummel 3 geführt und in eine Zentrierbohrung 4 an der Rotorwelle 5 bzw. deren Verlängerung 9 eingeschraubt ist, angebaut werden.

## Patentansprüche

1. Elektromotor (1) mit wahlweise anbaubaren Bauteilen, wie Bremse (2), Impuls-Geber (10) oder Lüfter (11, 12), dadurch gekennzeichnet, daß jeder am Elektromotor (1) anbaubare Bauteil (2, 10, 11, 12) über einen Wellenstummel (3) mit einem Zentrierbund (16) mit einer Rotorwelle (5, 9) des Elektromotors (1) verbindbar ist, daß in der Rotorwelle (5, 9) des Elektromotors (1) eine Gewindebohrung (4) mit einer Zentrierbohrung (17) vorgesehen ist, und daß der Wellenstummel (3) mit in der Zentrierbohrung (17) eingesetztem Zentrierbund (16) mit der Rotorwelle (5, 9) verschraubbar ist.

2. Elektromotor nach Anspruch 1, dadurch gekennzeichnet, daß der Wellenstummel (3) eine axiale Durchgangsbohrung (18) aufweist, durch welche eine Schraube (13) geführt ist, welche in die Gewindebohrung (4) einschraubbar ist.

3. Elektromotor nach Anspruch 1, dadurch gekennzeichnet, daß der Wellenstummel (3) einen an den Zentrierbund (16) anschließenden Gewindezapfen (19) aufweist, der in die Gewindebohrung (4) der Rotorwelle (5, 9) einschraubbar ist.

4. Elektromotor nach einem der Ansprüche 1 bis 3, dadurch gekennzeichnet, daß der Wellenstummel (3) an seinem dem Zentrierbund (16) gegenüberliegenden Ende eine Zentrierbohrung (20) aufweist.

5. Elektromotor nach Anspruch 3 oder 4, dadurch gekennzeichnet, daß jeder Wellenstummel (3) an seinem dem Gewindezapfen (19) gegenüberliegenden Ende eine Gewindebohrung aufweist, die der Gewindebohrung (4) in der Rotorwelle (5, 9) entspricht, und in die der Gewindezapfen (19) eines weiteren Wellenstummels (3) einschraubbar ist.

6. Elektromotor nach einem der Ansprüche 1 bis 5, dadurch gekennzeichnet, daß bei Anbau einer Bremse (2) diese mit einem Lagerschild (6) des Elektromotors (1) verbunden ist.

7. Elektromotor nach Anspruch 6, dadurch gekennzeichnet, daß die Bremse (2) mit dem Lagerschild (6) durch wenigstens einen Schraubbolzen, der in eine Gewindebohrung (7) im Lagerschild (6) eingedreht ist, verbunden ist.

8. Elektromotor nach einem der Ansprüche 1 bis 7, dadurch gekennzeichnet, daß das B-seitige Ende der Rotorwelle (5, 9) des Elektromotors (1) mit der Gewindebohrung (4) und der Zentrierbohrung (17) versehen ist.
